# EUROPEAN PATENT APPLICATION

(11) **EP 2 996 050 A1**
(43) Date of publication of application: **16.03.2016**
(21) Application number: 14820110.6
(22) Date of filing: 27.06.2014
(51) Int. Cl.: G06F 17/30

(54) **METHOD AND APPARATUS OF GENERATING MULTIMEDIA FILE**

(30) Priority: 05.07.2013 CN 201310282495
(71) Applicant: Huawei Technologies Co., Ltd., Longgang District Shenzhen, Guangdong 518129 (CN)
(72) Inventor: XU, Jie, Shenzhen Guangdong 518129 (CN); DONG, Tiantian, Shenzhen Guangdong 518129 (CN); YANG, Sang, Shenzhen Guangdong 518129 (CN)
(74) Representative: Maiwald Patentanwalts GmbH
(86) International application number: PCT/CN2014/081030
(87) International publication number: WO 2015/000385

(57) **Abstract**

The present invention discloses a method for generating a multimedia file, where the method includes the following steps: selecting a multimedia clip according to at least one received input instruction in a process of multimedia recording; and parsing the selected multimedia clip to obtain corresponding text information, generating a multimedia file according to the at least one received input instruction, and generating a file name of the multimedia file according to the text information. By using the foregoing technical solution, a multimedia file is generated by using text information that is obtained by parsing a multimedia clip, so that a file name of the multimedia file can accurately reflect key information of the multimedia file, and efficiency of searching for a target multimedia file is improved.

## Description

This application claims priority to Chinese Patent Application No. 201310282495.7, filed with the Chinese Patent Office on July 5, 2013 and entitled "METHOD AND APPARATUS FOR GENERATING MULTIMEDIA FILE", which is incorporated herein by reference in its entirety.

### TECHNICAL FIELD

The present invention relates to the field of multimedia technologies, and in particular, to a method and an apparatus for generating a multimedia file.

### BACKGROUND

In the prior art, a file name of a multimedia file is not key information of content of the multimedia file, leading to low efficiency of searching for a multimedia file of related content. At present, the following methods are generally used for generating a multimedia file name: method 1, generating a multimedia file name according to a date-time or location information of multimedia, or a combination of a date-time and location information; method 2, for a mobile communications terminal, acquiring related information of a call contact during a call to generate a multimedia file name. For example, a user is now on a call with Wang, the user records the call, and after the call ends, a system acquires content (such as a name) in card information of Wang to generate a multimedia file name.

In the foregoing methods for generating a multimedia file name, a generated multimedia file name is not key information of a multimedia file, and cannot accurately and intuitively describe content of the multimedia file, causing low efficiency with which a user searches for a multimedia file of related content. When it is required to search for multimedia including specific content, multimedia files have to be opened one by one, and the multimedia file including the related specific content can be determined only after listening. Although a multimedia file name generated according to method 2 includes information about a call contact, which increases an identification degree of a multimedia file to some extent, method 2 is severely limited in terms of application scenarios, and cannot satisfy more common multimedia scenarios. A method for generating a file name of a multimedia file in the prior art cannot accurately reflect key information of the multimedia file, causing a low identification degree of the multimedia file, and reducing efficiency with which a user searches for the multimedia file.

### SUMMARY

An objective of the present invention is to provide a method for generating a multimedia file, so that a multimedia file can reflect key information of the multimedia file more accurately, thereby improving efficiency of searching for a target multimedia file.

The objective of the present invention is achieved by using the following technical solutions:
According to a first aspect of embodiments of the present invention, a method for generating a multimedia file is provided, including the following steps: selecting a multimedia clip according to at least one received input instruction in a process of multimedia recording; parsing the selected multimedia clip to obtain corresponding text information; and generating a multimedia file according to the at least one received input instruction, and generating a file name of the multimedia file according to the text information.

In a first possible implementation manner of the first aspect, the input instruction specifically includes at least one of the following operations: long pressing a screen, pressing a key, rotating a terminal, holding a terminal tightly, sliding on a screen, and shaking a terminal.

With reference to the first aspect or the first possible implementation manner of the first aspect, in a second possible implementation manner of the first aspect, the selecting a multimedia clip according to at least one received input instruction specifically includes: receiving an input instruction, and determining a start time and an end time in the input instruction; and selecting the multimedia clip according to the start time and the end time in the input instruction; and the generating a multimedia file according to the at least one received input instruction specifically includes: generating the multimedia file according to a multimedia clip that is between the start time in the input instruction and an end time at which the recording ends.

With reference to the first aspect or the first possible implementation manner of the first aspect, in a third possible implementation manner of the first aspect, the selecting a multimedia clip according to at least one received input instruction specifically includes: receiving a first input instruction, and determining a start time and an end time in the first input instruction; and selecting the multimedia clip according to the start time and the end time in the first input instruction; and the generating a multimedia file according to the at least one received input instruction specifically includes: receiving a second input instruction, and determining a start time in the second input instruction; and generating the multimedia file according to a multimedia clip that is between the start time in the first input instruction and the start time in the second input instruction.

With reference to the first aspect or any one of the foregoing possible implementation manners, in a fourth possible implementation manner of the first aspect, the generating a file name of the multimedia file according to the text information specifically includes: using the text information as a multimedia file name or as partial information of a multimedia file name, naming the multimedia file in a stipulated naming format, and saving the multimedia file.

With reference to the first aspect or any one of the foregoing possible implementation manners, in a fifth possible implementation manner of the first aspect, the method further includes: presetting a target language of the text information; and before the parsing the selected multimedia clip to obtain corresponding text information, the method further includes: identifying the selected multimedia clip by using a local device or a network-side server to obtain corresponding text information that conforms to the preset target language.

With reference to the first aspect or any one of the foregoing possible implementation manners, in a sixth possible implementation manner of the first aspect, the method further includes: setting an information tag for the selected multimedia clip, where the information tag includes a start time and an end time of the selected multimedia clip, and the text information corresponding to the selected multimedia clip.

With reference to the sixth possible implementation manner of the first aspect, in a seventh possible implementation manner of the first aspect, the setting an information tag for the selected multimedia clip specifically includes: setting the information tag at the end time of the selected multimedia clip.

According to a second aspect, an apparatus for generating a multimedia file is provided, including: a receiving unit, a multimedia clip generating unit, a parsing unit, and a multimedia file generating unit, where: the receiving unit is configured to receive at least one input instruction in a process of multimedia recording; the multimedia clip generating unit is configured to select a multimedia clip according to the at least one received input instruction; the parsing unit is configured to parse the selected multimedia clip to obtain corresponding text information; and the multimedia file generating unit is configured to generate a multimedia file according to the at least one received input instruction, and generate a file name of the multimedia file according to the text information.

In a first possible implementation manner of the second aspect, the apparatus further includes a determining unit, where: the determining unit is configured to determine a start time and an end time in the input instruction; the multimedia clip generating unit is configured to select the multimedia clip according to the start time and the end time in the input instruction; and the multimedia file generating unit is configured to generate the multimedia file according to a multimedia clip that is between the start time in the input instruction and an end time at which the recording ends.

In a second possible implementation manner of the second aspect, the apparatus further includes a determining unit, where: the receiving unit is configured to receive a first input instruction and a second input instruction; the determining unit is configured to determine a start time and an end time in the first input instruction; the multimedia clip generating unit is configured to select the multimedia clip according to the start time and the end time in the first input instruction; the determining unit is further configured to determine a start time in the second input instruction; and the multimedia file generating unit is configured to generate the multimedia file according to a multimedia clip that is between the start time in the first input instruction and the start time in the second input instruction.

With reference to the second aspect or any one of the foregoing possible implementation manners, in a third possible implementation manner of the second aspect, the apparatus further includes a processing unit, where: the processing unit is configured to use the text information as a multimedia file name or as partial information of a multimedia file name, name the multimedia file in a stipulated naming format, and save the multimedia file.

With reference to the second aspect or any one of the foregoing possible implementation manners, in a fourth possible implementation manner of the second aspect, the processing unit is further configured to: before the selected multimedia clip is parsed to obtain the corresponding text information, preset a target language of the text information.

With reference to the second aspect or any one of the foregoing possible implementation manners, in a fifth possible implementation manner of the second aspect, the processing unit is further configured to: set an information tag for the selected multimedia clip, where the information tag includes a start time and an end time of the selected multimedia clip, and the text information corresponding to the selected multimedia clip.

By using the foregoing technical solutions, a multimedia clip is selected according to at least one received input instruction in a process of multimedia recording, the selected multimedia clip is parsed to obtain corresponding text information, a multimedia file is generated according to the at least one received input instruction, and a file name of the multimedia file is generated according to the text information. The text information is used as a multimedia file or as some information of a multimedia file, and the multimedia file is named in a stipulated naming format and saved, so that the multimedia file can accurately reflect key information of the multimedia file, and efficiency of searching for a target multimedia file is improved.

### BRIEF DESCRIPTION OF DRAWINGS

FIG. 1 is a flowchart of a method for generating a multimedia file according to an embodiment of the present invention;
FIG. 2A and FIG. 2B are schematic diagrams of information tags in a generated multimedia file according to an embodiment of the present invention;
FIG. 3 is a schematic diagram of information tags in a generated multimedia file according to another embodiment of the present invention;
FIG. 4 is a schematic diagram of multimedia file names of generated multimedia files according to another embodiment of the present invention;
FIG. 5 is a flowchart of a method for generating a multimedia file according to another embodiment of the present invention;
FIG. 6 is a flowchart of a method for generating a multimedia file according to still another embodiment of the present invention;
FIG. 7 is a schematic diagram of a method for generating a multimedia file according to an embodiment of the present invention;
FIG. 8 is a schematic diagram of an apparatus 80 for generating a multimedia file according to an embodiment of the present invention;
FIG. 9 is a schematic diagram of an apparatus 80 for generating a multimedia file according to another embodiment of the present invention; and
FIG. 10 is a schematic block diagram of an apparatus 100 for generating a multimedia file according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

At present, by using an existing method for generating a multimedia file, a generated multimedia file name is not key information of multimedia, and cannot accurately and intuitively describe content of the multimedia file, causing a low identification degree of the multimedia file. To resolve the problem that content of a multimedia file cannot be described accurately and intuitively by using the existing method for generating a multimedia file, embodiments of the present invention provide a method and an apparatus for generating a multimedia file.

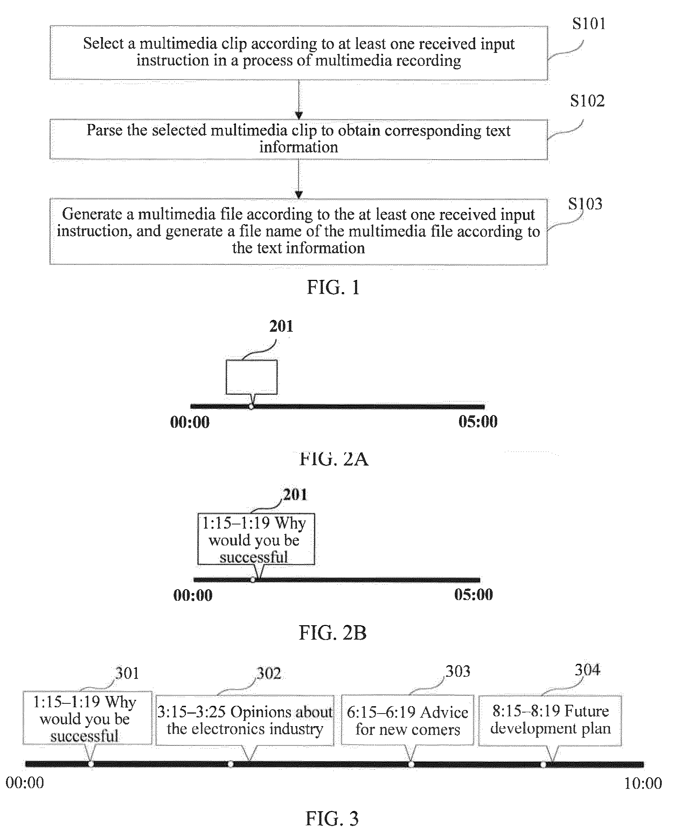

FIG. 1 is a flowchart of a method for generating a multimedia file according to an embodiment of the present invention. As shown in FIG. 1, this embodiment of the method for generating a multimedia file in the present invention includes steps:
S101: Select a multimedia clip according to at least one received input instruction in a process of multimedia recording.

The process of multimedia recording may be recording an audio file or recording a video file.

The process of multimedia recording may be applied to a scenario such as instant messaging, conference call, or voice communication.

The input instruction includes: a user may select a multimedia clip by long pressing a screen or pressing a key, or select a multimedia clip by rotating a terminal or holding a terminal tightly for a period of time, or select a multimedia clip by sliding on a screen or shaking a terminal for a period of time. In this embodiment of the present invention, the input instruction further includes a start time and an end time in the input instruction.

The selecting a multimedia clip according to at least one received input instruction in a process of multimedia recording is specifically: when key information that a user needs appears in a multimedia file in a process of recording the multimedia file, the multimedia clip may be selected according to the input instruction.

The key information may be information such as a phone number, a website, and an e-mail address.

The selecting a multimedia clip is specifically: selecting the multimedia clip according to the start time and the end time in the input instruction.

S102: Parse the selected multimedia clip to obtain corresponding text information.

The parsing the selected multimedia clip to obtain corresponding text information is specifically: performing speech recognition according to the multimedia clip to obtain the text information corresponding to the multimedia clip.

In another embodiment of the present invention, before the parsing the selected multimedia clip to obtain corresponding text information, the method further includes: presetting a target language of the text information, so that the selected multimedia clip can be correctly parsed into the text information. Meanwhile, the selected multimedia clip may be identified by using a local device to obtain the corresponding text information that conforms to the preset target language; when a portable terminal used by a user has a network function, the selected multimedia clip may also be identified by using a network-side server to obtain the corresponding text information that conforms to the preset target language.

S103: Generate a multimedia file according to the at least one received input instruction, and generate a file name of the multimedia file according to the text information.

In this embodiment of the present invention, the multimedia file may be saved.

According to the text information that is obtained by means of parsing and corresponds to the selected multimedia clip, the text information is used as a multimedia file name or as partial information of a multimedia file name. The multimedia file is named in a stipulated naming format and saved.

In this embodiment of the present invention, in a process of multimedia recording, when one input instruction is received, a start time and an end time in the input instruction are determined according to the received input instruction. A multimedia clip is selected according to the start time and the end time in the input instruction; a multimedia file is generated according to a multimedia clip that is between the start time in the input instruction and an end time at which the recording ends; and corresponding text information that is obtained by parsing the selected multimedia clip is used as a multimedia file name or as partial information of a multimedia file name, and the multimedia file is named in a stipulated naming format and saved.

In another embodiment of the present invention, in a process of multimedia recording, according to a start time in a first input instruction that is received, a multimedia file is generated according to a multimedia clip that is between a start time of the multimedia recording and the start time in the first input instruction, and the multimedia file is named in a stipulated naming format and saved.

In another embodiment of the present invention, when multiple input instructions are received, according to a first input instruction that is received, a start time and an end time in the first input instruction are determined, and a multimedia clip is selected according to the start time and the end time in the first input instruction; a second input instruction is received, a start time in the second input instruction is determined, and a multimedia file is generated according to a multimedia clip that is between the start time in the first input instruction and the start time in the second input instruction; a last input instruction is received, a start time and an end time in the input instruction are determined, a multimedia clip is selected according to the start time and the end time in the last input instruction, and a multimedia file is generated according to a multimedia clip that is between the start time in the last input instruction and an end time at which the recording ends; and corresponding text information that is obtained by parsing the selected multimedia clip is used as a multimedia file name or as partial information of a multimedia file name, and the multimedia files are named in a stipulated naming format and saved.

That two input instructions are received is used as an example for description. A first input instruction is received, a start time and an end time in the first input instruction are determined, a multimedia clip is selected according to the start time and the end time in the first input instruction, and the selected multimedia clip is parsed to obtain corresponding text information; a second input instruction is received, a start time in the second input instruction is determined, a multimedia file is generated according to a multimedia clip that is between the start time in the first input instruction and the start time in the second input instruction, a file name of the multimedia file is generated according to the text information, and the multimedia file is saved. A second input instruction is received, a start time and an end time in the second input instruction are determined, a multimedia clip is selected according to the start time and the end time in the second input instruction, and a multimedia file is generated according to a multimedia clip that is between the start time in the second input instruction and an end time at which the recording ends, a file name of the multimedia file is generated according to the text information, and the multimedia file is saved.

In this embodiment of the present invention, the first input instruction that is received may be specifically: detecting the first input instruction according to gesture recognition; the last input instruction that is received may be specifically: detecting, according to gesture recognition, whether there is a recording ending instruction after the input instruction is received, where when the recording ending instruction is detected, the received input instruction is the last input instruction.

By means of gesture recognition, the first input instruction and the second input instruction may be determined, and the start times and the end times of the input instructions may also be determined.

FIG. 2A and FIG. 2B are schematic diagrams of information tags in a generated multimedia file according to an embodiment of the present invention. In another embodiment of the present invention, an information tag is set for a selected multimedia clip at an end time of the selected multimedia clip, and the information tag includes a start time and the end time of the selected multimedia clip, and text information corresponding to the selected multimedia clip. As shown in FIG. 2A, the information tag set for the selected multimedia clip may be used as a control that is set at the end time of the selected multimedia clip. When a user needs to view the information tag and to identify the selected multimedia clip according to the information tag, the user may tap the information control to view the information tag, as shown in FIG. 2B. The method for setting the information tag for the selected multimedia clip at the end time of the selected multimedia clip helps to identify the selected multimedia clip, thereby improving efficiency of extracting the selected multimedia clip.

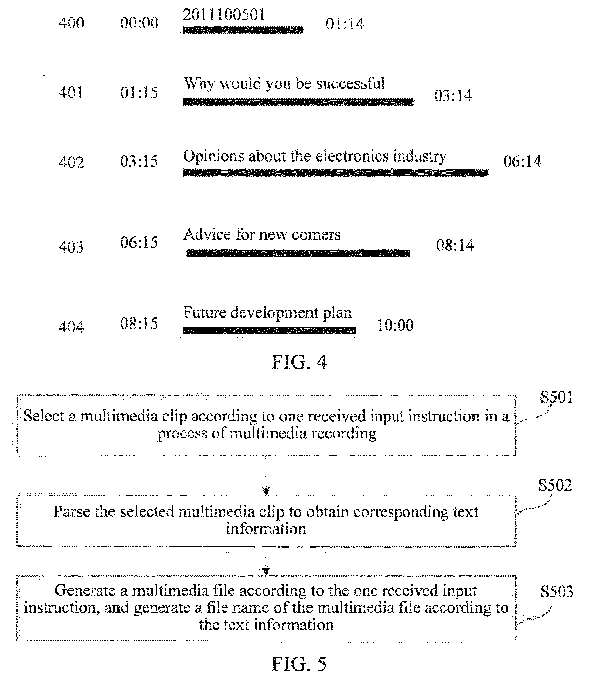

FIG. 3 is a schematic diagram of information tags in a generated multimedia file according to another embodiment of the present invention. FIG. 4 is a schematic diagram of multimedia file names of generated multimedia files according to another embodiment of the present invention.

In another embodiment of the present invention, with reference to the schematic diagram of information tags that is shown in FIG. 3 and the schematic diagram of multimedia file names of multimedia files that is shown in FIG. 4, parsing a selected multimedia clip to generate a multimedia file name and saving a generated multimedia file are further described. A total length of a recorded multimedia file is 10 minutes. Four multimedia clips are selected according to four received input instructions in a process of multimedia recording, and the four multimedia clips are parsed to obtain four pieces of corresponding text information. Information tags are generated according to start times and end times of the selected multimedia clips and the text information corresponding to the selected multimedia clips. Like the information tags shown in FIG. 3, an information tag 301 to an information tag 304 of the four pieces of text information that are obtained by means of parsing are as follows:
content of the information tag 301 is "1:15-1:19 Why could you be successful";
content of the information tag 302 is "3:15-3:25 Opinions about the electronics industry";
content of the information tag 303 is "6:15-6:19 Advice for new comers"; and
content of the information tag 304 is "9:15-9:19 Future development plan".

FIG. 4 is the schematic diagram of multimedia file names in generated multimedia files. As shown in FIG. 4, in a process from start of multimedia recording to an end of the multimedia recording, five multimedia files in total are generated and saved. A multimedia file 400 is a multimedia file, of the saved multimedia files, which is between a start time of the recording and a start time in a first input instruction, and the multimedia file is named in a stipulated naming format and saved. A manner of generating and saving a multimedia file 401 to a multimedia file 403 is specifically: generating the three multimedia files according to three received input instructions in the process of multimedia recording. In the process of multimedia recording, a first input instruction is received, and a start time and an end time in the first input instruction are determined; a multimedia clip is selected according to the start time and the end time in the first input instruction; and a second input instruction is received, and a start time in the second input instruction is determined; a multimedia file is generated according to a multimedia clip that is between the start time in the first input instruction and the start time in the second input instruction, a file name of the multimedia file is generated according to text information that is obtained by means of parsing and corresponds to the selected multimedia clip, and the multimedia file is saved. For example, the multimedia file 401 to the multimedia file 403 are in a one-to-one correspondence with the information tag 301 to the information tag 303 respectively. A manner of generating and saving the multimedia file 404 is specifically: in the process of multimedia recording, a fourth input instruction is received, and a start time and an end time in the input instruction are determined; a multimedia clip is selected according to the start time and the end time in the input instruction; a multimedia file is generated according to a multimedia clip that is between the start time in the input instruction and an end time at which the recording ends, a file name of the multimedia file is generated according to text information that is obtained by means of parsing and corresponds to the selected multimedia clip, and the multimedia file is saved. For example, for the multimedia file 404, the information tag 304 corresponds to the multimedia file 404.

The method for generating a multimedia file in this embodiment of the present invention may be applied to all terminal devices, for example, terminals, such as a mobile phone and a tablet computer PAD in touch-screen terminal devices, or other mobile terminals.

In this embodiment of the method for generating a multimedia file in the present invention, a multimedia file is generated according to a received input instruction, and a file name of the multimedia file is generated according to text information that is obtained by means of parsing and corresponds to a selected multimedia clip, so that the multimedia file name can accurately and intuitively reflect key information of the multimedia file, thereby increasing an identification degree of a target multimedia file. Meanwhile, multimedia files are saved independently and completely according to content of the multimedia files, which also improves efficiency of searching for a target multimedia file. In addition, a time length of a long pressing action is determined by a user according to content of a multimedia file, and therefore multimedia clips of different time lengths may be selected flexibly for parsing and thus to generate text information. For example, in a process of multimedia recording, a segment of multimedia file corresponding to an asked question needs to be selected. If the asked question is relatively long, the long pressing action lasts for a relatively long time.

FIG. 5 is a flowchart of a method for generating a multimedia file according to another embodiment of the present invention. As shown in FIG. 5, this embodiment of the method for generating a multimedia file in the present invention includes steps:
S501: Select a multimedia clip according to one received input instruction in a process of multimedia recording.

The process of multimedia recording may be recording an audio file or recording a video file.

The process of multimedia recording may be applied to a scenario such as instant messaging, conference call, or voice communication.

The input instruction includes: a user may select a multimedia clip by long pressing a screen or pressing a key, or select a multimedia clip by rotating a terminal or holding a terminal tightly for a period of time, or select a multimedia clip by sliding on a screen or shaking a terminal for a period of time. In this embodiment of the present invention, the input instruction further includes a start time and an end time in the input instruction.

The selecting a multimedia clip according to one received input instruction in a process of multimedia recording is specifically: when key information that a user needs appears in a multimedia file in a process of recording the multimedia file, a multimedia clip may be selected according to an input instruction.

The key information may be information such as a phone number, a website, and an e-mail address.

The selecting a multimedia clip is specifically: selecting the multimedia clip according to the start time and the end time in the input instruction.

S502: Parse the selected multimedia clip to obtain corresponding text information.

The parsing the selected multimedia clip to obtain corresponding text information is specifically: performing speech recognition according to the multimedia clip to obtain the text information corresponding to the multimedia clip.

S503: Generate a multimedia file according to the one received input instruction, and generate a file name of the multimedia file according to the text information.

In this embodiment of the present invention, the multimedia file may be saved.

According to the text information that is obtained by means of parsing and corresponds to the selected multimedia clip, the text information is used as a multimedia file name or as partial information of a multimedia file name. The multimedia file is named in a stipulated naming format and saved.

In this embodiment of the present invention, in a process of multimedia recording, according to one received input instruction, a start time and an end time in the input instruction are determined, a multimedia file is generated according to a multimedia clip that is between a start time of the multimedia recording and the start time in the input instruction, and the multimedia file is named in a stipulated naming format and saved; and a multimedia clip is selected according to the start time and the end time in the input instruction, a file name of the multimedia file is generated according to text information that is obtained by means of parsing and corresponds to the selected multimedia clip, and the multimedia file is saved.

In another embodiment of the present invention, before the parsing the selected multimedia clip to obtain corresponding text information, the method further includes: presetting a target language of the text information, so that the selected multimedia clip can be correctly parsed into the text information. Meanwhile, the selected multimedia clip may be identified by using a local device to obtain the corresponding text information that conforms to the preset target language; when a portable terminal used by a user has a network function, the selected multimedia clip may also be identified by using a network-side server to obtain the corresponding text information that conforms to the preset target language.

In another embodiment of the present invention, an information tag is set, according to a start time and an end time of the selected multimedia clip and the text information corresponding to the selected multimedia clip, at the end time of the selected multimedia clip. The information tag includes the start time and the end time of the selected multimedia clip, and the text information corresponding to the selected multimedia clip. The information tag is set at the end time of the selected multimedia clip, so as to facilitate identification of the selected multimedia clip and to improve efficiency of searching for a target multimedia file.

The method for generating a multimedia file in this embodiment of the present invention may be applied to all terminal devices, for example, terminals, such as a mobile phone and a PAD in touch-screen terminal devices, or other mobile terminals.

In this embodiment of the method for generating a multimedia file in the present invention, in a process of multimedia recording, a multimedia file is generated according to a received input instruction, and a file name of the multimedia file is generated according to text information that is obtained by means of parsing and corresponds to a selected multimedia clip, so that the multimedia file name can accurately and intuitively reflect key information of the multimedia file, thereby improving efficiency of searching for a target multimedia file, and increasing an identification degree of a target multimedia file. Meanwhile, multimedia files are saved independently and completely according to content of the multimedia files, which also improves efficiency of searching for a target multimedia file. In addition, after an information tag is generated according to the text information, for a portable terminal having a display capability, the information tag may be displayed on a screen according to selection of a user, so as to facilitate previewing.

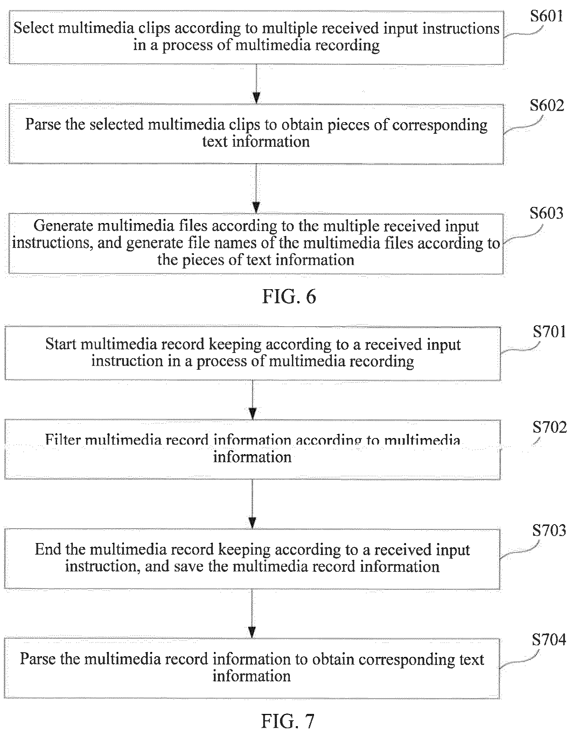

FIG. 6 is a flowchart of a method for generating a multimedia file according to still another embodiment of the present invention. As shown in FIG. 6, this embodiment of the method for generating a multimedia file in the present invention includes steps:
S601: Select multimedia clips according to multiple received input instructions in a process of multimedia recording.

The process of multimedia recording may be recording an audio file or recording a video file.

The process of multimedia recording may be applied to a scenario such as instant messaging, conference call, or voice communication.

The input instruction includes: a user may select a multimedia clip by long pressing a screen or pressing a key, or select a multimedia clip by rotating a terminal or holding a terminal tightly for a period of time, or select a multimedia clip by sliding on a screen or shaking a terminal for a period of time. In this embodiment of the present invention, the input instruction further includes a start time and an end time in the input instruction.

The selecting multimedia clips according to multiple received input instructions in a process of multimedia recording is specifically: when key information that a user needs appears in a multimedia file in a process of recording the multimedia file, the multimedia clips may be selected according to the input instructions.

The key information may be information such as a phone number, a website, and an e-mail address.

The selecting multimedia clips is specifically: selecting the multimedia clips according to the start times and the end times of the input instructions.

S602: Parse the selected multimedia clips to obtain corresponding pieces of text information.

The parsing the selected multimedia clips to obtain corresponding pieces of text information is specifically: performing speech recognition according to the multimedia clips to obtain pieces of text information corresponding to the multimedia clips.

S603: Generate multimedia files according to the multiple received input instructions, and generate file names of the multimedia files according to the pieces of text information.

In this embodiment of the present invention, the multimedia files may be saved.

According to the pieces of text information that are obtained by means of parsing and correspond to the selected multimedia clips, the pieces of text information are used as multimedia file names or as partial information of multimedia file names, and the multimedia files are named in a stipulated naming format and saved.

In this embodiment of the present invention, in the process of multimedia recording, according to a received first input instruction, a start time and an end time in the input instruction are determined, a multimedia file is generated according to a multimedia clip that is between a start time of the multimedia recording and the start time in the input instruction, and the multimedia file is named in a stipulated naming format and saved.

According to the multiple received input instructions, a first input instruction is received, a start time and an end time in the first input instruction are determined, and a multimedia clip is selected according to the start time and the end time in the first input instruction; a second input instruction is received, and a start time in the second input instruction is determined; and a multimedia file is generated according to a multimedia clip that is between the start time in the first input instruction and the start time in the second input instruction, a file name of the multimedia file is generated according to text information that is obtained by means of parsing and corresponds to the selected multimedia clip, and the multimedia file is saved.

A last input instruction is received, a start time and an end time in the input instruction are determined, and a multimedia clip is selected according to the start time and the end time in the last input instruction; and a multimedia file is generated according to a multimedia clip that is between the start time in the last input instruction and an end time at which the recording ends, corresponding text information that is obtained by parsing the selected multimedia clip is used as a multimedia file name or as partial information of a multimedia file name, and the multimedia file is named in a stipulated naming format and saved.

In this embodiment of the present invention, the first input instruction that is received may be specifically: detecting the first input instruction according to gesture recognition; the last input instruction that is received may be specifically: detecting, according to gesture recognition, whether there is a recording ending instruction after the input instruction is received, where when the recording ending instruction is detected, the received input instruction is the last input instruction.

By means of gesture recognition, the first input instruction and the second input instruction may be determined, and the start times and the end times of the input instructions may also be determined.

In another embodiment of the present invention, before the parsing the selected multimedia clips to obtain corresponding pieces of text information, the method further includes: presetting a target language of the pieces of text information, so that the selected multimedia clips can be correctly parsed into the pieces of text information. Meanwhile, the selected multimedia clips may be identified by using a local device to obtain the corresponding pieces of text information that conform to the preset target language; when a portable terminal used by a user has a network function, the selected multimedia clips may also be identified by using a network-side server to obtain the corresponding pieces of text information that conforms to the preset target language.

In another embodiment of the present invention, information tags are set, according to start times and end times of the selected multimedia clips and the pieces of text information corresponding to the selected multimedia clips, at the end times of the selected multimedia clips. The information tag includes the start time and the end time of the selected multimedia clip, and the text information corresponding to the selected multimedia clip. The information tag is set at the end time of the selected multimedia clip, so as to facilitate identification of the selected multimedia clip and to improve efficiency of searching for a target multimedia file.

The method for generating a multimedia file in this embodiment of the present invention may be applied to all terminal devices, for example, terminals, such as a mobile phone and a PAD in touch-screen terminal devices, or other mobile terminals.

In this embodiment of the method for generating a multimedia file in the present invention, in a process of multimedia recording, a multimedia file is generated according to a received input instruction, and a file name of the multimedia file is generated according to text information that is obtained by means of parsing and corresponds to a selected multimedia clip, so that the multimedia file name can accurately and intuitively reflect key information of the multimedia file, thereby improving efficiency of searching for a target multimedia file, and increasing an identification degree of a target multimedia file. Meanwhile, multimedia files are saved independently and completely according to content of the multimedia files, which also improves efficiency of searching for a target multimedia file. In addition, after an information tag is generated according to the text information, for a portable terminal having a display capability, the information tag may be displayed on a screen according to selection of a user, so as to facilitate previewing.

FIG. 7 is a schematic diagram of a method for generating a multimedia file according to an embodiment of the present invention. During an instant call, when a user needs to record related information, the recording is usually performed in a manner of tapping an interface option to jump to a notepad or in a one-screen multiple-tasking manner, and the user needs to put a mobile phone down from an ear, query again after recording some characters, and then tap for input again. Operations in the entire process are very cumbersome, and efficiency of extracting required content is low. As shown in FIG. 7, this embodiment of the method for generating a multimedia file in the present invention includes steps:
S701: Start multimedia record keeping according to a received input instruction in a process of multimedia recording.

The process of multimedia recording may be recording an audio file or recording a video file.

The process of multimedia recording may be applied to a scenario such as instant messaging, conference call, or voice communication.

The input instruction includes: long pressing a screen, pressing a key, rotating a terminal, holding a terminal tightly for a period of time, sliding on a screen, or shaking a terminal for a period of time to start the multimedia record keeping.

The starting multimedia record keeping according to a received input instruction in a process of multimedia recording is specifically: when key information that a user needs appears in a multimedia file in a process of recording the multimedia file, the multimedia record keeping may be started according to the input instruction.

The key information may be information such as a phone number, a website, and an e-mail address.

S702: Filter multimedia record information according to multimedia information.

The multimedia record information is filtered according to a set filter rule for filtering multimedia information.

The filter rule may be: when user input is continuous numbers, letters, or a mixture of numbers and letters, the filter rule is satisfied. For example, according to related record information input by a user, if other input, in addition to continuous numbers, letters, or a mixture of numbers and letters, is included in the related record information input by the user, the multimedia record information does not conform to the filter rule for filtering multimedia record information.

S703: End the multimedia record keeping according to a received input instruction, and save the multimedia record information.

When the input multimedia record information ends, the multimedia record keeping is ended according to an ending input instruction.

The input instruction includes: long pressing a screen, pressing a key, rotating a terminal, holding a terminal tightly for a period of time, sliding on a screen, or shaking a terminal for a period of time to start multimedia record keeping. The multimedia record keeping is ended according to the received input instruction, and the multimedia record keeping may also be ended by using voice input in the multimedia information.

S704: Parse the multimedia record information to obtain corresponding text information.

The parsing the multimedia record information to obtain corresponding text information is specifically: performing speech recognition according to the multimedia record information to obtain text information corresponding to a multimedia clip.

The text information obtained by means of parsing may be saved in a notepad or an information tag as important information that a user needs.

The method for generating a multimedia file in this embodiment of the present invention may be applied to all terminal devices, for example, terminals, such as a mobile phone and a PAD in touch-screen terminal devices, or other mobile terminals.

In this embodiment of the method for generating a multimedia file in the present invention, in a process of multimedia recording, multimedia record keeping is started according to an input instruction, and multimedia record information is filtered according to related multimedia record information input by a user; and the multimedia record keeping is ended according to an input instruction of the user, the multimedia record information is saved, and the multimedia record information is parsed to obtain corresponding text information. The corresponding text information is obtained according to the multimedia record information, so that the user can accurately and quickly acquire key information of a multimedia file, thereby improving efficiency of acquiring content of information related to the multimedia file, and increasing accuracy of extracting required information by the user.

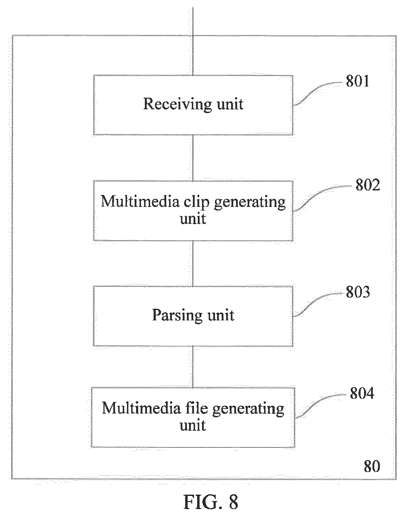

FIG. 8 is a schematic diagram of an apparatus 80 for generating a multimedia file according to an embodiment of the present invention. As shown in FIG. 8, the apparatus 80 includes: a receiving unit 801, a multimedia clip generating unit 802, a parsing unit 803, and a multimedia file generating unit 804.

The receiving unit 801 receives at least one input instruction in a process of multimedia recording.

The multimedia clip generating unit 802 selects a multimedia clip according to the at least one received input instruction.

The parsing unit 803 parses the selected multimedia clip to obtain corresponding text information.

The multimedia file generating unit 804 generates a multimedia file according to the at least one received input instruction, and generates a file name of the multimedia file according to the text information.

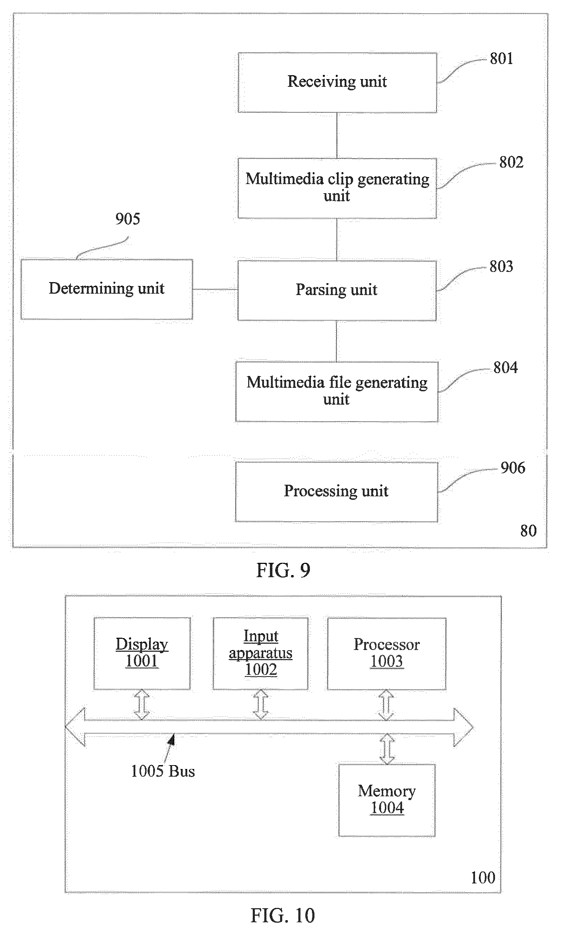

FIG. 9 is a schematic diagram of an apparatus 80 for generating a multimedia file according to another embodiment of the present invention. As shown in FIG. 9, the apparatus 80 further includes a determining unit 905 and a processing unit 906.

In another embodiment of the present invention, the determining unit 905 determines a start time and an end time in the input instruction; the multimedia clip generating unit 802 selects a multimedia clip according to the start time and the end time in the input instruction received by the receiving unit 801; the multimedia file generating unit 804 generates a multimedia file according to a multimedia clip that is between the start time in the input instruction and an end time at which the recording ends; and the processing unit 906 is configured to use the text information as a multimedia file name or as partial information of a multimedia file name, name the multimedia file in a stipulated naming format, and save the multimedia file.

In another embodiment of the present invention, the receiving unit 801 is configured to receive a first input instruction and a second input instruction; the determining unit 905 is configured to determine a start time and an end time in the first input instruction; the multimedia clip generating unit 804 is configured to select a multimedia clip according to the start time and the end time in the first input instruction; and the determining unit 905 is further configured to determine a start time in the second input instruction, the multimedia file generating unit 804 is configured to generate a multimedia file according to a multimedia clip that is between the start time in the first input instruction and the start time in the second input instruction, and the processing unit 906 is configured to use the text information as a multimedia file name or as partial information of a multimedia file name, name the multimedia file in a stipulated naming format, and save the multimedia file.

In another embodiment of the present invention, the processing unit 906 is further configured to: before the selected multimedia clip is parsed to obtain the corresponding text information, preset a target language of the text information. The target language of the text information is preset, so that the selected multimedia clip can be correctly parsed into the text information. Meanwhile, the selected multimedia clip may be identified by using a local device to obtain the corresponding text information that conforms to the preset target language; when a portable terminal used by a user has a network function, the selected multimedia clip may also be identified by using a network-side server to obtain the corresponding text information that conforms to the preset target language.

In another embodiment of the present invention, the processing unit 906 is further configured to: set an information tag for the selected multimedia clip, where the information tag includes a start time and an end time of the selected multimedia clip, and the text information corresponding to the selected multimedia clip. The information tag is set at the end time of the selected multimedia clip, so as to facilitate identification of the selected multimedia clip and to improve efficiency of searching for a target multimedia file.

The apparatus for generating a multimedia file in this embodiment of the present invention may be all terminal devices, for example, terminals, such as a mobile phone and a PAD in touch-screen terminal devices, or other mobile terminals.

In the apparatus 80 for generating a multimedia file, the receiving unit 801 receives at least one input instruction in a process of multimedia recording; the multimedia clip generating unit 802 selects a multimedia clip according to the at least one received input instruction; the parsing unit 803 parses the selected multimedia clip to obtain corresponding text information; the multimedia file generating unit 804 generates a multimedia file according to the at least one received input instruction, and generates a file name of the multimedia file according to the text information; the determining unit 905 determines a start time and an end time in an input instruction, or determines a start time and an end time in a first input instruction, or determines a start time in a second input instruction; and the processing unit 906 is configured to use the text information as a multimedia file name or as partial information of a multimedia file name, name the multimedia file in a stipulated naming format, and save the multimedia file. It is implemented that the multimedia file is generated, the multimedia file is named according to content of the multimedia file, and the multimedia file is saved. For simplicity, specific details are not provided herein again.

In this embodiment of the apparatus for generating a multimedia file in the present invention, in a process of multimedia recording, a multimedia file is generated according to a received input instruction, and a file name of the multimedia file is generated according to text information that is obtained by means of parsing and corresponds to a selected multimedia clip, so that the multimedia file name can accurately and intuitively reflect key information of the multimedia file, thereby improving efficiency of searching for a target multimedia file, and increasing an identification degree of a target multimedia file. Meanwhile, multimedia files are saved independently and completely according to content of the multimedia files, which also improves efficiency of searching for a target multimedia file. In addition, after an information tag is generated according to the text information, for a portable terminal having a display capability, the information tag may be displayed on a screen according to selection of a user, so as to facilitate previewing.

FIG. 10 is a schematic block diagram of an apparatus 100 for generating a multimedia file according to an embodiment of the present invention. As shown in FIG. 10, the apparatus 100 includes a display 1001, an input apparatus 1002, a processor 1003, a memory 1004, and a bus 1005.

The display 1001 may be a suitable apparatus such as a cathode ray tube (CRT, Cathode Ray Tube) display, a liquid crystal display (LCD, Liquid Crystal Display), or a touch screen (Touch Screen), and receives an instruction by using the bus 1005 to enable a screen of the display to present a graphical user interface.

The input apparatus 1002 may include any suitable apparatus such as a keyboard, a mouse, a track recognizer, or a speech recognition interface, and is configured to receive input of a user, generate control input, and send the control input to the processor or another component by using the bus 1005. Particularly, when the display of the apparatus 100 includes a touch screen, the display is an input apparatus at the same time.

In addition, the memory 1004 may include one or more of a floppy disk, a USB flash drive, a removable hard disk, a read-only memory (ROM, Read-Only Memory), a random access memory (RAM, Random Access Memory), a magnetic disk, an optical disc, and the like of a computer, and is configured to: store a program that can execute the embodiment of the present invention or to store an application database of the embodiment of the present invention, and receive, by using the bus 1005, input of another component or stored information, such as a generated multimedia file name, that is invoked by another component.

The processor 1003 is configured to execute the program stored in the memory 1004 of the embodiment of the present invention, and perform bidirectional communication with other apparatuses by using the bus.

The memory 1004 and the processor 1003 may also be integrated into a physical module that applies the embodiment of the present invention, and the physical module stores and runs the program that implements the embodiment of the present invention.

Components of the apparatus 100 are coupled together by using the bus system 1005. The bus system 1005 may include, in addition to a data bus, a power bus, a control bus, a status signal bus, and the like. However, for the purpose of clear description, all buses are marked as the bus system 1005 in the figure.

In this embodiment of the present invention, units of the apparatus 100 execute the following content separately.

The display 1001 receives an instruction of the processor 1003, and enables a screen of the display to present a graphical user interface.

In a process of multimedia recording, the input apparatus 1002 receives at least one input instruction and sends the input instruction to the memory 1004; or receives at least one input instruction and sends the input instruction to the processor 1003, and then the processor 1003 sends the input instruction to the memory 1003.

The processor 1003 receives the input instruction sent by the input apparatus 1002 and selects a multimedia clip according to the at least one received input instruction, and sends the selected multimedia clip to the memory 1003.

The memory 1004 stores the input instruction sent by the input apparatus 1002 or the selected multimedia clip sent by the processor 1003.

Optionally, the processor 1003 is further configured to parse the selected multimedia clip to obtain corresponding text information.

Optionally, in the process of multimedia recording, the processor 1003 generates a multimedia file according to the at least one received input instruction, and generates a file name of the multimedia file according to the text information.

Optionally, the processor 1003 is further configured to receive an input instruction, determine a start time and an end time in the input instruction, and select a multimedia clip according to the start time and the end time in the input instruction; further configured to generate a multimedia file according to a multimedia clip that is between the start time in the input instruction and an end time at which the recording ends; and further configured to use the text information as a multimedia file name or as partial information of a multimedia file name, name the multimedia file in a stipulated naming format, and send the multimedia file to the memory 1004 to save the multimedia file.

Optionally, the processor 1003 is further configured to receive a first input instruction, determine a start time and an end time in the first input instruction, and select a multimedia clip according to the start time and the end time in the first input instruction; further configured to receive a second input instruction, determine a start time in the second input instruction, and generate a multimedia file according to a multimedia clip that is between the start time in the first input instruction and the start time in the second input instruction; and further configured to use the text information as a multimedia file name or as partial information of a multimedia file name, name the multimedia file in a stipulated naming format, and send the multimedia file to the memory 1004 to save the multimedia file.

Optionally, the processor 1003 is further configured to identify the selected multimedia clip by using a local device or a network-side server to obtain corresponding text information that conforms to a preset target language.

Optionally, the processor 1003 is further configured to set an information tag at an end time of the selected multimedia clip

Optionally, the memory 1004 is further configured to store the text information that is obtained by means of parsing by the processor 1003.

Optionally, the memory 1004 is further configured to store the multimedia file that is generated by the processor 1003.

The apparatus for generating a multimedia file in this embodiment of the present invention may be all terminal devices, for example, terminals, such as a mobile phone and a PAD in touch-screen terminal devices, or other mobile terminals.

In the apparatus 100 for generating a multimedia file, the input apparatus 1002 receives an input instruction, that is, receives a user instruction, the processor 1003 selects a multimedia clip according to the received user instruction, and the processor 1003 parses the selected multimedia clip to obtain corresponding text information, generates a multimedia file according to the received input instruction, generates a file name of the multimedia file according to the text information that is obtained by means of parsing and corresponds to the selected multimedia clip, and saves the multimedia file in the memory 1004. It is implemented that the multimedia file is generated, the multimedia file is named according to content of the multimedia file, and the multimedia file is saved. For simplicity, specific details are not provided herein again.

In this embodiment of the apparatus for generating a multimedia file in the present invention, in a process of multimedia recording, a multimedia file is generated according to a received input instruction, and a file name of the multimedia file is generated according to text information that is obtained by means of parsing and corresponds to a selected multimedia clip, so that the multimedia file name can accurately and intuitively reflect key information of the multimedia file, thereby improving efficiency of searching for a target multimedia file, and increasing an identification degree of a target multimedia file. Meanwhile, multimedia files are saved independently and completely according to content of the multimedia files, which also improves efficiency of searching for a target multimedia file. In addition, after an information tag is generated according to the text information, for a portable terminal having a display capability, the information tag may be displayed on a screen according to selection of a user, so as to facilitate previewing.

A person of ordinary skill in the art may be aware that, in combination with the examples described in the embodiments disclosed in this specification, units, algorithms, and method steps may be implemented by a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing server and unit, reference may be made to a corresponding process in the foregoing method embodiments, and details are not described herein again.

In the several embodiments provided in the present application, the disclosed server and method may be implemented in other manners. For example, the described server embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for generating a multimedia file, comprising the following steps:
selecting a multimedia clip according to at least one received input instruction in a process of multimedia recording;
parsing the selected multimedia clip to obtain corresponding text information; and
generating a multimedia file according to the at least one received input instruction, and generating a file name of the multimedia file according to the text information.

2. The method according to claim 1, wherein the input instruction specifically comprises at least one of the following operations: long pressing a screen, pressing a key, rotating a terminal, holding a terminal tightly, sliding on a screen, and shaking a terminal.

3. The method according to claim 1 or 2, wherein the selecting a multimedia clip according to at least one received input instruction specifically comprises:
receiving an input instruction, and determining a start time and an end time in the input instruction; and
selecting the multimedia clip according to the start time and the end time in the input instruction; and
the generating a multimedia file according to the at least one received input instruction specifically comprises:
generating the multimedia file according to a multimedia clip that is between the start time in the input instruction and an end time at which the recording ends.

4. The method according to claim 1 or 2, wherein the selecting a multimedia clip according to at least one received input instruction specifically comprises:
receiving a first input instruction, and determining a start time and an end time in the first input instruction; and
selecting the multimedia clip according to the start time and the end time in the first input instruction; and
the generating a multimedia file according to the at least one received input instruction specifically comprises:
receiving a second input instruction, and determining a start time in the second input instruction; and
generating the multimedia file according to a multimedia clip that is between the start time in the first input instruction and the start time in the second input instruction.

5. The method according to any one of claims 1 to 4, wherein the generating a file name of the multimedia file according to the text information specifically comprises: using the text information as a multimedia file name or as partial information of a multimedia file name, naming the multimedia file in a stipulated naming format, and saving the multimedia file.

6. The method according to any one of claims 1 to 5, wherein the method further comprises:
presetting a target language of the text information; and
before the parsing the selected multimedia clip to obtain corresponding text information, the method further comprises:
identifying the selected multimedia clip by using a local device or a network-side server to obtain corresponding text information that conforms to the preset target language.

7. The method according to any one of claims 1 to 6, wherein the method further comprises:
setting an information tag for the selected multimedia clip, wherein the information tag comprises a start time and an end time of the selected multimedia clip, and the text information corresponding to the selected multimedia clip.

8. The method according to claim 7, wherein the setting an information tag for the selected multimedia clip specifically comprises: setting the information tag at the end time of the selected multimedia clip.

9. An apparatus for generating a multimedia file, comprising: a receiving unit, a multimedia clip generating unit, a parsing unit, and a multimedia file generating unit, wherein:
the receiving unit is configured to receive at least one input instruction in a process of multimedia recording;
the multimedia clip generating unit is configured to select a multimedia clip according to the at least one received input instruction;
the parsing unit is configured to parse the selected multimedia clip to obtain corresponding text information; and
the multimedia file generating unit is configured to generate a multimedia file according to the at least one received input instruction, and generate a file name of the multimedia file according to the text information.

10. The apparatus according to claim 9, wherein the apparatus further comprises a determining unit, wherein: the determining unit is configured to determine a start time and an end time in the input instruction;
the multimedia clip generating unit is configured to select the multimedia clip according to the start time and the end time in the input instruction; and
the multimedia file generating unit is configured to generate the multimedia file according to a multimedia clip that is between the start time in the input instruction and an end time at which the recording ends.

11. The apparatus according to claim 9, wherein the apparatus further comprises a determining unit, wherein:
the receiving unit is configured to receive a first input instruction and a second input instruction;
the determining unit is configured to determine a start time and an end time in the first input instruction;
the multimedia clip generating unit is configured to select the multimedia clip according to the start time and the end time in the first input instruction;
the determining unit is further configured to determine a start time in the second input instruction; and
the multimedia file generating unit is configured to generate the multimedia file according to a multimedia clip that is between the start time in the first input instruction and the start time in the second input instruction.

12. The apparatus according to any one of claims 9 to 11, wherein the apparatus further comprises a processing unit, wherein:
the processing unit is configured to use the text information as a multimedia file name or as partial information of a multimedia file name, name the multimedia file in a stipulated naming format, and save the multimedia file.

13. The apparatus according to any one of claims 9 to 12, wherein the processing unit is further configured to: before the selected multimedia clip is parsed to obtain the corresponding text information, preset a target language of the text information.

14. The apparatus according to any one of claims 9 to 13, wherein the processing unit is further configured to: set an information tag for the selected multimedia clip, wherein the information tag comprises a start time and an end time of the selected multimedia clip, and the text information corresponding to the selected multimedia clip.
